# EUROPÄISCHE PATENTSCHRIFT

(11) **EP 3 701 242 B1**
(45) Veröffentlichungstag und Bekanntmachung des Hinweises auf die Patenterteilung: **06.09.2023**
(21) Anmeldenummer: 18774013.9
(22) Anmeldetag: 21.09.2018
(51) Int. Cl.: G01N 1/22, G01N 1/24, F16L 55/10, F16K 7/10

(54) **ABGASPROBENENTNAHMESYSTEM**
EXHAUST GAS SAMPLE TAKING SYSTEM
SYSTÈME DE RÉCUPÉRATION D'ÉCHANTILLONS DE GAZ D'ÉCHAPPEMENT

(30) Priorität: 23.10.2017 DE 102017124699
(43) Veröffentlichungstag der Anmeldung: 02.09.2020
(73) Patentinhaber: AVL Analytical Technologies GmbH, 41460 Neuss (DE)
(72) Erfinder: WILLICH, Sascha, 41564 Kaarst (DE); WOLFF, Marcus, 47807 Krefeld (DE)
(74) Vertreter: terpatent Patentanwälte ter Smitten Eberlein-Van Hoof Rütten Daubert
(86) Internationale Anmeldenummer: PCT/EP2018/075582
(87) Internationale Veröffentlichungsnummer: WO 2019/081140

(56) Entgegenhaltungen:
- EP-A1- 2 811 280
- WO-A2-02/07798
- GB-A- 2 430 255
- US-A- 4 586 873
- Ako Armaturen: "Pneumatische Quetschventile", , 16 October 2016 (2016-10-16), XP055914724, Retrieved from the Internet: URL:https://web.archive.org/web/2016101601 4951/http://www.ako-armaturen.de/produkte/ pneumatische-quetschventile.html [retrieved on 2022-04-22]
- Ako Armaturen: "Druckschalter für Quetschventile", , 26 September 2022 (2022-09-26), XP055964943, Retrieved from the Internet: URL:https://www.ako-shop.com/zubehoer/druc kschalter [retrieved on 2022-09-26]

## Beschreibung

Die Erfindung betrifft ein Abgasprobenentnahmesystem mit einer Hauptförderleitung, einer Hauptdurchsatzpumpe, über welche ein Probengas in der Hauptförderleitung förderbar ist, und mindestens einer ersten Venturidüse und einer zweiten Venturidüse, wobei die erste Venturidüse und die zweite Venturidüse parallelgeschaltet sind und stromaufwärts zur Hauptdurchsatzpumpe in der Hauptförderleitung angeordnet sind, wobei der ersten Venturidüse ein erstes Regelventil zugeordnet ist und der zweiten Venturidüse ein zweites Regelventil zugeordnet ist.

In den meisten Ländern existieren Abgasgesetze, die vorschreiben, dass vor dem Verkauf eines Kraftfahrzeugs eine Typfreigabe erfolgen muss. Bei der Typfreigabe wird ein Typ des Verbrennungsmotors oder des Kraftfahrzeugs bezüglich der ausgestoßenen Schadstoffmenge überprüft und freigegeben. In den Abgasgesetzen wird unter anderem die Art und Weise der Abgasmessung vorgeschrieben. Dabei existieren grundsätzlich zwei unterschiedliche Messmethoden, wobei bei der ersten Messmethode das von dem Verbrennungsmotor emittierte, unverdünnte Abgas analysiert wird und mit Kenntnis der Abgasvolumenströme die Schadstoffmassen bestimmt werden. Bei der zweiten Messmethode wird das von dem Verbrennungsmotor emittierte Abgas mit Luft verdünnt, indem es in eine sogenannte CVS-Anlage (constant volume sampling) geleitet wird. In der CVS-Anlage wird der Volumenstrom des verdünnten Abgases durch eine Venturidüse konstant gehalten, wobei durch die Differenz zwischen dem in die CVS-Anlage eingeleiteten und veränderlichen Abgasvolumenstrom und dem konstanten Volumenstrom des verdünnten Abgases mehr oder weniger Luft in die CVS-Anlage angesaugt wird, so dass das Abgas in Abhängigkeit von dem Abgasvolumenstrom mehr oder weniger verdünnt wird. Dabei wird bei einem geringen Abgasvolumenstrom mehr verdünnt und bei einem hohen Abgasvolumenstrom weniger verdünnt. Auf diese Weise stellt sich eine Proportionalität zwischen der Schadstoffkonzentration des verdünnten Abgases und dem Produkt aus der unverdünnten Abgaskonzentration und dem Gesamtabgasvolumenstrom ein. Dabei wird während dem gesamten Fahrzyklus eine geringe Menge des verdünnten Abgases in einen Abgasbeutel geleitet und in diesem Abgasbeutel gesammelt. Das in dem Abgasbeutel gesammelte, verdünnte Abgas wird analysiert, wobei die Schadstoffkonzentration des verdünnten Abgases ermittelt wird und bei Kenntnis des Gesamtabgasvolumenstrom die Abgasemissionsmassen der unterschiedlichen im Abgas enthaltenen Schadstoffe, beispielsweise Kohlendioxid, Kohlenmonoxid, Kohlenwasserstoff oder Stickoxid, bestimmt werden.

Die EP 2 811 280 A1 offenbart beispielsweise eine derartige CVS-Anlage mit einem Verdünnungstunnel, welcher einen Abgaseinlass und einen Lufteinlass aufweist. Durch eine in den Verdünnungstunnel hineinragende Probeentnahmesonde wird eine Probe des verdünnten Abgases entnommen und über eine Probeentnahmeleitung in einen Abgasbeutel geleitet. Stromabwärts des Verdünnungstunnels erstrecken sich vier voneinander getrennte und parallelgeschaltete Abgasleitungen. In jeder Abgasleitung sind jeweils eine Venturidüse und ein Regelventil angeordnet, wobei jeweils ein Regelventil einer Venturidüse zugeordnet ist. Je nach zu prüfendem Verbrennungsmotor variiert die erforderliche Verdünnung. Durch die Regelventile können die einzelnen Abgasleitungen deaktiviert oder aktiviert werden, wodurch der Volumenstrom des verdünnten Abgases je nach zu prüfenden Verbrennungsmotor angepasst werden kann.

Als Regelventile werden üblicherweise Klappenventile verwendet, welche pneumatisch betätigt werden. Nachteilig an Abgasprobenentnahmesystemen mit derartigen Regelventilen ist, dass die Ausgestaltung derartiger Regelventile aufwendig und kostenintensiv ist, wodurch die Herstellungskosten der Abgasprobenentnahmesysteme erhöht werden. Außerdem weisen derartig ausgestaltete Regelventile einen großen Bauraum auf.

Die Aufgabe der Erfindung ist es daher, ein Abgasprobenentnahmesystem bzw. die Regelventile derart weiterzuentwickeln, dass der Bauraum sowie das Gewicht der Regelventile und dadurch der Abgasprobenentnahmesysteme reduziert werden und die Regelventile bzw. die Abgasprobenentnahmesysteme einfach und kostengünstig herstellbar sind.

Diese Aufgabe wird durch das erfindungsgemäße Abgasprobenentnahmesystem nach Anspruch 1 gelöst.

Dadurch, dass die Regelventile als Quetschventile ausgeführt sind, wobei jedes Regelventil ein flexibles, schlauchartiges Regelelement und einen das Regelelement umgebenden Druckraum aufweist, wobei der Druckraum mit einem Fluid befüllbar ist, wobei die Regelventile als pneumatische Quetschventile ausgebildet, wobei der Druckraum des jeweiligen Regelventils mit einer Druckluftleitung fluidisch verbunden ist, wird ein einfach aufgebautes und einfach funktionierendes Regelventil geschaffen, welches einen reduzierten Bauraum und ein reduziertes Gewicht aufweist. Auf diese Weise werden der Bauraum, das Gewicht sowie die Herstellungskosten des Abgasprobenentnahmesystems reduziert.

Das Regelelement ist aus einem hochelastischen Elastomer hergestellt, welches mittig in einem Ventilgehäuse angeordnet ist und an beiden Enden über jeweils einen Flansch oder eine Muffe am Ventilgehäuse befestigt ist. Das Ventilgehäuse und die Außenumfangsfläche des Regelelements begrenzen den Druckraum. Durch Zuführung eines Fluids in den Druckraum verformt sich das Regelelement derart, dass die durch das unverformte Regelelement gebildete Durchströmöffnung versperrt wird und der Durchströmungsquerschnitt des Regelventils geschlossen wird. Zum Öffnen des Regelventils wird der Druckraum entlüftet bzw. entleert, wobei sich das Regelelement aufgrund seiner Elastizität in den unverformten Grundzustand, in dem die Durchströmöffnung geöffnet ist, vollständig zurückverformt.

Dadurch, dass das Regelventil als pneumatisches Quetschventil ausgeführt ist, kann das Regelventil auf eine einfache und kostengünstige Weise betätigt werden.

Die Druckluftleitung weist einen Druckschalter auf. Dadurch kann auf eine kostengünstige Weise der Schaltzustand des Regelventils ermittelt werden, wobei der Druckschalter lediglich detektiert, ob der Druckraum mit dem Fluid befüllt ist oder entlüftet ist. Dadurch wird beispielsweise ein Ausfall der Druckluftquelle erkannt.

Vorzugsweise ist der Druckraum über die Druckluftleitung wahlweise mit einer Druckkammer oder mit einer Vakuumkammer verbindbar. Bei der Verbindung des Druckraums mit der Vakuumkammer stellt sich eine derartige Druckdifferenz zwischen dem Druckraum und der Hauptförderleitung ein, dass das Regelelement nach radial außen belastet wird und ein zuverlässiges Öffnen des Quetschventils gewährleistet wird.

Vorzugsweise ist der Durchströmungsquerschnitt der ersten Venturidüse größer ausgeführt als der Durchströmungsquerschnitt der zweiten Venturidüse, so dass auf eine einfache Weise mehr als zwei konstante Volumenströme des verdünnten Abgases einstellbar sind, indem entweder das erste Regelventil geöffnet ist und das zweite Regelventil geschlossen ist, das zweite Regelventil geöffnet und das erste Regelventil geschlossen ist oder beide Regelventile geöffnet sind.

In einer bevorzugten Ausgestaltung schließt das schlauchartige Regelelement in einer Offenstellung des Regelventils bündig an die daran anschließenden Rohrabschnitte an. Dadurch werden die Strömungsverluste verhindert.

Vorzugsweise entspricht der Innendurchmesser des Regelelements in der Offenstellung des Regelventils dem Innendurchmesser der daran anschließenden Rohrabschnitte. Dadurch werden Strömungsverluste in der Offenstellung des Regelventils verhindert.

Vorzugsweise sind vier parallelgeschaltete Venturidüsen mit jeweils einem Regelventil vorgesehen. Vorzugsweise weisen die vier parallelgeschalteten Venturidüsen unterschiedliche Durchmesser auf.

Dadurch können 15 unterschiedliche, konstante Volumenströme des verdünnten Abgases eingestellt werden. Auf diese Weise kann ein derartiges Abgasprobenentnahmesystem für die Abgasmessung von einer Vielzahl von unterschiedlichen Verbrennungsmotoren eingesetzt werden.

In einer bevorzugten Ausgestaltung sind die Regelventile stromabwärts zu den Venturidüsen angeordnet, wodurch eine nachteilhafte Strömungsbeeinflussung des verdünnten Abgases nahe der Probengasentnahme verhindert wird.

Es wird somit ein Abgasprobenentnahmesystem bereitgestellt, welches einfach und kostengünstig herstellbare Regelventile mit einem geringen Bauraum sowie ein reduziertes Gewicht aufweist.

Nachfolgend wird die Erfindung anhand einer bevorzugten Ausführung unter Bezugnahme auf die anliegenden Zeichnungen näher erläutert.

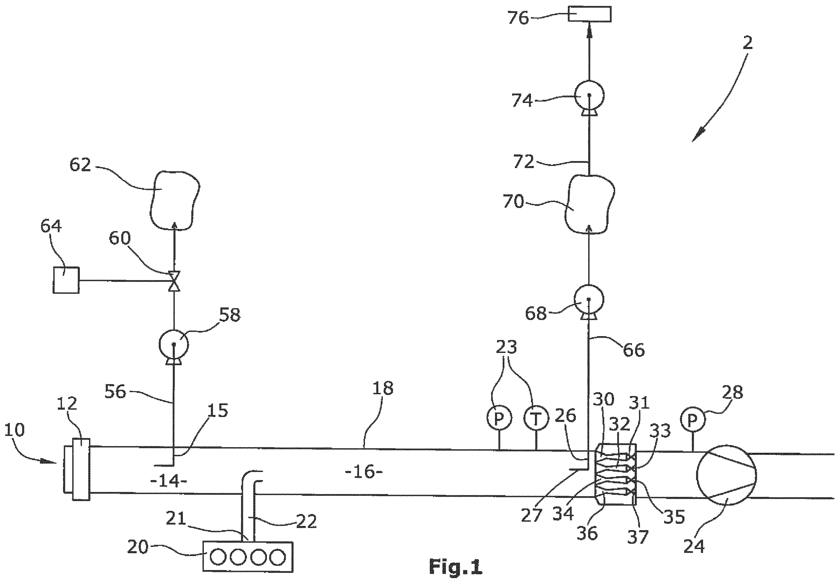

Figur 1 zeigt schematisch ein erfindungsgemäßes Abgasprobenentnahmesystem in Form eines Fließschemas, und
Figur 2 zeigt ein Regelventil des in Figur 1 dargestellten Abgasprobenentnahmesystems in schematischer Darstellung.

Das erfindungsgemäße Abgasprobenentnahmesystem 2 besteht aus einem Lufteinlass 10, an dem ein Luftfilter 12 angeordnet ist. Die Luft gelangt in einen Luftkanal 14, in welchen eine Luftprobeentnahmesonde 15 ragt, über die kontinuierlich während der Messung Luftproben entnommen werden. Der Luftkanal 14 mündet in eine Mischzone 16, wo die Luft mit Abgas aus einer Abgasquelle 20, die an einen Abgaskanal 22 mündenden Abgaseinlass 21 angeschlossen ist, homogen vermischt wird. Die Mischzone 16 ist der erste Abschnitt einer Hauptförderleitung 18, durch die ein Probengas, bestehend aus Luft und Abgas, strömt. In der Hauptförderleitung 18 können Mittel zur Konditionierung des Probengases, beispielsweise ein Wärmetauscher zur Einstellung einer festen Temperatur des Probengases angeordnet sein. Zusätzlich sind in der Hauptförderleitung 18 Messmittel 23 angeordnet, welche zur Temperatur- und Druckmessung innerhalb der Hauptförderleitung 18 und somit zur Messung des Volumenstroms in der Hauptförderleitung 18 dienen. Die Förderung des Probengases erfolgt über eine Hauptdurchsatzpumpe 24.

In die Hauptförderleitung 18 ragen eine oder mehrere Probeentnahmesonden 27, über die eine repräsentative Probe des Probengases entnommen werden kann. Die Hauptdurchsatzpumpe 24 stellt einen ausreichenden Durchsatz in der Hauptförderleitung 18 sicher. Unmittelbar vor der Hauptdurchsatzpumpe 24 ist ein Druckmessgerät 28 angeordnet, über welches der Druck vor der Hauptdurchsatzpumpe 24 gemessen wird.

In Strömungsrichtung zwischen der Probeentnahmesonde 27 und der Hauptdurchsatzpumpe 24 sind in der Hauptförderleitung 18 vier Venturidüsen 30, 32, 34, 36 angeordnet. Die Venturidüsen 30, 32, 34, 36 werden im überkritischen Bereich betrieben, wobei der überkritische Bereich durch die Hauptdurchsatzpumpe 24 sichergestellt wird. Der Durchfluss der Venturidüsen 30, 32, 34, 36 erfolgt nach den Gesetzen der Strömungslehre, so dass mittels der Venturidüsen 30, 32, 34, 36 bei einem ausreichenden Förderdruck ein konstanter Volumenstrom des Probengases eingestellt wird.

Bei der Prüfung unterschiedlicher Verbrennungsmotoren ändert sich aufgrund der unterschiedlichen Größen der Verbrennungsmotoren der von der Abgasquelle 20 ausgestoßene und in die Hautförderleitung 18 eingeleitete Abgasvolumenstrom. Dabei sinkt bei einem geringen Abgasvolumenstrom der Anteil des Abgases in dem Probengas, wobei die Schadstoffkonzentration in dem Probengas unterhalb eines kritischen Wertes absinken kann, so dass eine zuverlässige Schadstoffmessung nicht mehr möglich ist. Im umgekehrten Fall steigt der Anteil des Abgases in dem Probengas derart an, dass eine Kondensation des in dem Abgas gelösten Wasserdampfs erfolgt und die Messergebnisse dadurch verfälscht werden.

Um ein optimales Verhältnis zwischen der Abgasmenge und der Luftmenge in dem Probengas herzustellen, sind in der Hauptförderleitung 18 vier parallel zueinander geschaltete Venturidüse 30, 32, 34, 36 angeordnet, wobei jeder Venturidüse 30, 32, 34, 36 jeweils ein Regelventil 31, 33, 35, 37 zugeordnet ist.

Jedes Regelventil 31, 33, 35, 37 kann zwischen einer Offenstellung und einer Schließstellung verstellt werden, wodurch bedarfsgerecht der konstante Volumenstrom des Probengases für die Abgasmessung eingestellt werden kann. Zusätzlich weisen die vier Venturidüsen 30, 32, 34, 36 unterschiedliche Durchströmungsquerschnitte auf, so dass durch das Schließen bzw. Öffnen der entsprechenden Regelventile 31, 33, 35, 37 in Kombination mit den unterschiedlichen Durchströmungsquerschnitten der Venturidüsen 30, 32, 34, 36 15 unterschiedliche Volumenströme des Probengases eingestellt werden können.

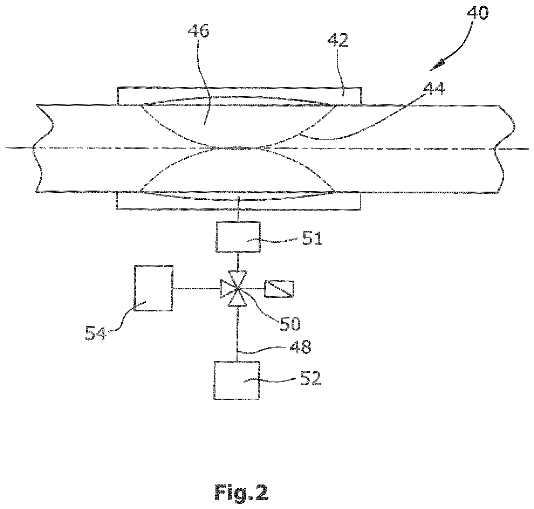

Die Regelventile 31, 33, 35, 37 sind als Quetschventile 40 ausgeführt. Ein derartiges Quetschventil 40 ist in der Figur 2 schematisch gezeigt, wobei die Offenstellung mittels einer durchgezogenen Linie und eine Schließstellung mittels einer gestrichelten Linie dargestellt sind. Das Quetschventil 40 ist als pneumatisches Quetschventil 40 ausgeführt und weist ein Ventilgehäuse 42 auf, in dem ein Regelelement 44 angeordnet ist, welches schlauchförmig und hochelastisch, beispielsweise aus einem hochelastischen Elastomer, ausgebildet ist. Außerdem ist in dem Ventilgehäuse 42 ein Druckraum 46 ausgebildet, welcher durch das Regelelement 44 und das Ventilgehäuse 42 begrenzt wird. Der Druckraum 46 ist über eine Druckluftleitung 48 und in der Druckluftleitung 48 angeordnetes Regelventil 50 wahlweise mit einer Druckkammer 52 oder mit einer Vakuumkammer 54 fluidisch verbindbar. Außerdem weist die Druckluftleitung 48 einen Druckschalter 51 auf, durch den der Schaltzustand des Quetschventils 40 erfasst wird.

In der Schließstellung des pneumatischen Quetschventils 40 ist der Druckraum 46 mit Druckluft gefüllt, wobei das hochelastische Regelelement 44 nach radial innen gleichmäßig verformt ist und der Durchströmungsquerschnitt des Quetschventils 40 geschlossen ist. Beim Umschalten von der Schließstellung in die Offenstellung des Quetschventils 40 wird der Druckraum 46 entlüftet und mit der Vakuumkammer 54 fluidisch verbunden, wobei sich das hochelastische Regelelement 44 aufgrund seiner Elastizität in die Ausgangsstellung verformt. Durch die fluidische Verbindung des Druckraums 46 mit der Vakuumkammer 54 herrscht in dem Druckraum 46 ein niedrigerer Druck als in der Hauptförderleitung 18, so dass durch die Druckdifferenz das Regelelement 44 nach radial außen belastet wird und ein zuverlässiges Öffnen des Quetschventils 40 gewährleistet wird.

Über die mindestens eine Probeentnahmesonde 27 bzw. über die Probengasentnahmeleitung 26 wird das Probengas mittels einer Probengasförderpumpe 68 durch eine Probengasentnahmeleitung 66 in einen oder mehrere Probengasbeutel 70 gefördert.

Der Probengasbeutel 70 ist des Weiteren über eine Probengasanalyseleitung 72, in der ein Probengasfördermittel 74 angeordnet ist, mit einem oder mehreren Analysatoren 76 verbunden. In diesem Analysator 76 werden die Schadstoffe im Abgas, insbesondere die Anteile an Kohlenwasserstoffen, Kohlendioxid, Kohlenmonoxid und Stickoxiden, bestimmt.

Die über die Luftprobeentnahmesonde 15 entnommene Luft wird über eine Luftprobeleitung 56 mittels einer Luftförderpumpe 58 in einen Luftbeutel 62 gefördert. Um diesen Luftstrom konstant und sauber entnehmen zu können, ist in der Luftprobeleitung 56 ein mit einem Durchflussmessgerät 64 verbundener Durchflussregler 60 angeordnet. Die in dem Luftbeutel 62 gesammelte Luft wird bezüglich der Schadstoffkonzentration analysiert und die Schadstoffkonzentration des Probengases durch diesen ermittelten Wert der Schadstoffkonzentration der Luft korrigiert.

Das Abgasprobenentnahmesystem 2 wird so betrieben, dass ein Testzyklus mit dem Anstellen der Abgasquelle 20 beginnt. Zu diesem Zeitpunkt fördert die Hauptdurchsatzpumpe 24 das Probengas durch die Hauptförderleitung 18, wobei bei ausreichendem Förderdruck und durch die Venturidüsen 30, 32, 34, 36 sich ein konstanter Volumenstrom einstellt. Die einzelnen Venturidüsen 30, 32, 34, 36 werden bedarfsgerecht durch die jeweiligen Regelventile 31, 33, 35, 37 aktiviert und deaktiviert, wodurch ein für die Messung benötigter Volumenstrom eingestellt wird. Dabei werden die als pneumatische Quetschventile 40 ausgeführten Regelventile 31, 33, 35, 37 in der Schließstellung jeweils über eine Druckluftleitung 48 mit einer Druckkammer 52 fluidisch verbunden, wodurch der Druckraum 46 mit Druckluft gefüllt wird, das hochelastische Regelelement 44 sich nach radial innen verformt und der Durchströmungsquerschnitt des Quetschventils 40 geschlossen wird. In der Offenstellung der einzelnen Regelventile 31, 33, 35, 37 wird der Druckraum 46 des jeweiligen Quetschventils 40 entlüftet und mit einer Vakuumkammer 54 verbunden, wodurch im Druckraum 46 ein niedrigerer Druck herrscht als in der Hauptförderleitung 18, so dass das hochelastische Regelelement 44 aufgrund der Elastizität des Regelelements 44 und dem in dem Druckraum 46 herrschenden Druck verformt wird und der Durchströmungsquerschnitt des Quetschventils 40 geöffnet wird. Die Schaltstellung der Regelventile 31, 33, 35, 37 wird durch jeweils einen Druckschalter 51 ermittelt.

Über die Luftprobenentnahmesonde 15 wird aus dem Luftkanal 14 ein Probeluftstrom über die Luftprobeleitung 56 mittels der Luftförderpumpe 58 zum Luftbeutel 62 transportiert. Gleichzeitig wird das Probengas über eine oder mehrere Probeentnahmesonden 27 mittels der Probengasförderpumpe 68 durch die Probengasentnahmeleitung 66 zu dem einen oder mehreren Probengasbeuteln 70 gefördert. Mit Beendigung des Testzyklusses wird die Probengasförderpumpe 68 ausgestellt. Zusätzlich wird in diesem zweiten Schritt das Probengasfördermittel 74 angestellt, so dass das gesammelte Probengas aus den Probengasbeuteln 70 durch die Probengasanalyseleitung 72 zum Analysator 76 gefördert wird. Während dieses Prozesses läuft die Hauptdurchsatzpumpe 24 weiter, um in der Hauptförderleitung 18 vorhandenes Restabgas abzusaugen.

Es wird somit ein Abgasprobenentnahmesystem bereitgestellt, welches einfach und kostengünstig herstellbare Regelventile mit einem geringen Bauraum sowie einem reduzierten Gewicht aufweist.

Es sollte deutlich sein, dass der Schutzbereich des vorliegenden Hauptanspruchs nicht auf das beschriebene Ausführungsbeispiel der Anlage begrenzt ist, sondern durch die angefügten Patentansprüche definiert ist.

## Patentansprüche

1. Abgasprobenentnahmesystem mit
einer Hauptförderleitung (18),
einer Hauptdurchsatzpumpe (24), über welche ein Probengas in der Hauptförderleitung (18) förderbar ist, und
mindestens einer ersten Venturidüse (30) und einer zweiten Venturidüse (32), wobei die erste Venturidüse (30) und die zweite Venturidüse (32) parallelgeschaltet sind und stromaufwärts zur Hauptdurchsatzpumpe (24) in der Hauptförderleitung (18) angeordnet sind, wobei der ersten Venturidüse (30) ein erstes Regelventil (31) zugeordnet ist und der zweiten Venturidüse (32) ein zweites Regelventil (33) zugeordnet ist,
**dadurch gekennzeichnet, dass**
die Regelventile (31, 33) als Quetschventile (40) ausgeführt sind, wobei jedes Regelventil (31, 33) ein flexibles, schlauchartiges Regelelement (44) und einen das Regelelement (44) umgebenden Druckraum (46) aufweist, wobei der Druckraum (46) mit einem Fluid befüllbar ist, wobei die Regelventile (31, 33) als pneumatische Quetschventile (40) ausgebildet sind, wobei der Druckraum (46) des jeweiligen Regelventils (31, 33) mit einer Druckluftleitung (48) fluidisch verbunden ist, wobei die Druckluftleitung (48) einen Druckschalter (51) aufweist, welcher derart ausgeführt ist, dass durch den Druckschalter (51) der Schaltzustand des Quetschventils (40) erfasst wird.

2. Abgasprobenentnahmesystem nach Anspruch 1,
**dadurch gekennzeichnet, dass**
der Druckraum (46) über die Druckluftleitung (48) wahlweise mit einer Druckkammer (52) oder mit einer Vakuumkammer (54) verbindbar ist.

3. Abgasprobenentnahmesystem nach einem der vorhergehenden Ansprüche
**dadurch gekennzeichnet, dass**
der Durchströmungsquerschnitt der ersten Venturidüse (30) größer ausgeführt ist als der Durchströmungsquerschnitt der zweiten Venturidüse (32).

4. Abgasprobenentnahmesystem nach einem der vorhergehenden Ansprüche,
**dadurch gekennzeichnet, dass**
das schlauchartige Regelelement (44) in einer Offenstellung des Regelventils (31, 33) bündig an die daran anschließenden Rohrabschnitte anschließt.

5. Abgasprobenentnahmesystem nach einem der vorhergehenden Ansprüche,
**dadurch gekennzeichnet, dass**
der Innendurchmesser des Regelelements (31, 33) in der Offenstellung des Regelventils (31, 33) dem Innendurchmesser der daran anschließenden Rohrabschnitte entspricht.

6. Abgasprobenentnahmesystem nach einem der vorhergehenden Ansprüche,
**dadurch gekennzeichnet, dass**
vier parallelgeschaltete Venturidüsen (30, 32, 34, 36) mit jeweils einem Regelventil (31, 33, 35, 37) vorgesehen sind.

7. Abgasprobenentnahmesystem nach Anspruch 6,
**dadurch gekennzeichnet, dass**
die vier parallelgeschalteten Venturidüsen (30, 32, 34, 36) unterschiedliche Durchmesser aufweisen.

8. Abgasprobenentnahmesystem nach einem der vorhergehenden Ansprüche,
**dadurch gekennzeichnet, dass**
die Regelventile (31, 33) stromabwärts zu den Venturidüsen (30, 32) angeordnet sind.

## Claims

1. Exhaust gas sampling system with
a main delivery line (18),
a main delivery pump (24), via which a sample gas can be conveyed in the main delivery line (18), and
at least a first Venturi nozzle (30) and a second Venturi nozzle (32), wherein the first Venturi nozzle (30) and the second Venturi nozzle (32) are arranged in parallel and are arranged upstream of the main delivery pump (24) in the main delivery line (18), wherein a first control valve (31) is assigned to the first Venturi nozzle (30) and a second control valve (33) is assigned to the second Venturi nozzle (32), wherein
the control valves (31, 33) are configured as pinch valves (40), wherein each control valve (31, 33) comprises a flexible, hose-like control element (44) and a pressure chamber (46) surrounding the control element (44), wherein the pressure chamber (46) can be filled with a fluid, wherein the control valves (31, 33) are configured as pneumatic pinch valves (40), wherein the pressure chamber (46) of the respective control valve (31, 33) is fluidically connected to a compressed air line (48), wherein the compressed air line (48) comprises a pressure switch (51) which is configured such that the switching state of the pinch valve (40) is recorded by the pressure switch (51).

2. Exhaust gas sampling system according to claim 1, wherein
the pressure chamber (46) is optionally connectable to a pressure chamber (52) or to a vacuum chamber (54) via the compressed air line (48).

3. Exhaust gas sampling system according to one of the preceding claims, wherein
the flow cross-section of the first venturi nozzle (30) is configured larger than the flow cross-section of the second venturi nozzle (32).

4. Exhaust gas sampling system according to one of the preceding claims, wherein
the hose-like control element (44) is flush with the pipe sections adjoining it in an open position of the control valve (31, 33).

5. Exhaust gas sampling system according to one of the preceding claims, wherein
the inner diameter of the control element (31, 33) in the open position of the control valve (31, 33) corresponds to the inner diameter of the pipe sections adjoining it.

6. Exhaust gas sampling system according to one of the preceding claims, wherein
four venturi nozzles (30, 32, 34, 36) arranged in parallel and each having a control valve (31, 33, 35, 37) are provided.

7. An exhaust gas sampling system according to claim 6, wherein
the four venturi nozzles (30, 32, 34, 36) arranged in parallel comprise different diameters.

8. Exhaust gas sampling system according to one of the preceding claims, wherein
the control valves (31, 33) are arranged downstream of the venturi nozzles (30, 32).

## Revendications

1. Système d'échantillonnage des gaz d'échappement avec une conduite principale de transport (18),
une pompe de passage principale (24), par laquelle un gaz d'échantillonnage peut être transporté dans la conduite principale de transport (18), et
au moins une première buse à venturi (30) et une deuxième buse à venturi (32), la première buse à venturi (30) et la deuxième buse à venturi (32) étant montées en parallèle et disposées en amont de la pompe de passage principale (24) dans la conduite principale de transport (18), une première valve de réglage (31) étant associée à la première buse à venturi (30) et une deuxième valve de réglage (33) étant associée à la deuxième buse à venturi (32),
**caractérisé en ce que**
les valves de réglage (31, 33) sont réalisées sous forme de valves de pincement (40), chaque valve de réglage (31, 33) comprenant un élément de réglage (44) flexible, en forme de tube, et une chambre de pression (46) entourant l'élément de réglage (44), la chambre de pression (46) pouvant être remplie d'un fluide, les valves de réglage (31, 33) étant réalisées sous forme de valves de pincement pneumatiques (40), la chambre de pression (46) de la valve de réglage (31, 33) respective étant en communication fluidique avec une conduite d'air comprimé (48), la conduite d'air comprimé (48) comprenant un interrupteur à pression (51) qui est réalisé de telle sorte que l'état de commutation de la valve de pincement (40) est détecté par l'interrupteur à pression (51).

2. Système d'échantillonnage des gaz d'échappement selon la revendication 1,
**caractérisé en ce que**
la chambre de pression (46) peut être connectée par la conduite d'air comprimé (48) au choix avec une chambre de pression (52) ou avec une chambre à vide (54).

3. Système d'échantillonnage des gaz d'échappement selon l'une des revendications précédentes.
**caractérisé en ce que**
la section d'écoulement du premier buse venturi (30) est plus grande que la section d'écoulement du deuxième buse venturi (32).

4. Système d'échantillonnage des gaz d'échappement selon l'une des revendications précédentes,
**caractérisé en ce que**
l'élément de régulation (44) en forme de tuyau affleure les sections de tuyau qui s'y raccordent dans une position ouverte de la valve de réglage (31, 33).

5. Système d'échantillonnage des gaz d'échappement selon l'une des revendications précédentes,
**caractérisé en ce que**
le diamètre intérieur de l'élément de réglage (31, 33) correspond, lorsque la valve de réglage (31, 33) est en position ouverte, au diamètre intérieur des tronçons de tube qui s'y raccordent.

6. Système d'échantillonnage des gaz d'échappement selon l'une des revendications précédentes,
**caractérisé en ce que**
quatre buses de venturi (30, 32, 34, 36) montées en parallèle sont prévues avec chacune une valve de réglage (31, 33, 35, 37).

7. Système d'échantillonnage des gaz d'échappement selon la revendication 6,
**caractérisé en ce que**
les quatre buses de venturi (30, 32, 34, 36) montées en parallèle comprennent des diamètres différents.

8. Système d'échantillonnage des gaz d'échappement selon l'une des revendications précédentes,
**caractérisé en ce que**
les valves de réglage (31, 33) sont disposées en aval des buses de venturi (30, 32).
